# EUROPÄISCHE PATENTANMELDUNG

(11) **EP 2 060 856 A1**
(43) Veröffentlichungstag der Anmeldung: **20.05.2009**
(21) Anmeldenummer: 08017067.3
(22) Anmeldetag: 27.09.2008
(51) Int. Cl.: F24F 1/00

(54) **Unterflurklimatisierungsvorrichtung mit drehzahlgeregeltem Niedervolt-Gleichstrommotor für den Ventilator**

(30) Priorität: 13.11.2007 DE 202007015935 U; 03.04.2008 DE 202008004567 U
(71) Anmelder: Kampmann GmbH, 49811 Lingen (Ems) (DE)
(72) Erfinder: Brink, Arend, 49824 Emlichheim (DE)
(74) Vertreter: Möller, Friedrich

(57) **Zusammenfassung**

Bei versenkt im Boden eingebauten Unterflurklimatisierungsvorrichtungen besteht die Gefahr des Eindringens von Wasser oder anderen Flüssigkeiten. Das kann zu einem Kurzschluss beim Elektromotor zum Antrieb eines Querstromventilators (23) der Unterflurklimatisierungsvorrichtung führen.

Die Erfindung sieht es vor, den Elektromotor zum Antrieb eines Querstromventilators (23) der Unterflurklimatisierungsvorrichtung als Niedervolt-Gleichstrommotor (26) auszubilden. Ein solcher wird mit einer Gleichspannung von bis zum 50 V betrieben, wodurch auch ein Kurzschluss zu keiner Gefährdung, insbesondere von Personen, führt.

## Beschreibung

Die Erfindung betrifft eine Unterflurklimatisierungsvorrichtung gemäß dem Oberbegriff des Anspruchs 1.

Unterflurklimatisierungsvorrichtungen werden - wie der Name schon sagt - versenkt im Boden eingebaut. Üblicherweise wird dazu der Raum unter einem Zwischenboden genutzt. Die Unterflurklimatisierungsvorrichtung befindet sich dann zwischen einem bauwerksseitigen Boden, beispielsweise im Estrich eines Bodenaufbaus, einer Geschossdecke, eines Hohlraums oder in einem Doppelboden. Die Unterflurklimatisierungsvorrichtung ist dabei von einer durchlässigen Abdeckung, üblicherweise einem Rost, Gitter oder dergleichen, überdeckt. Die Abdeckung verläuft bündig zur Oberseite des Doppelbodens.

Infolge der Anordnung der Unterflurklimatisierungsvorrichtung im Boden und die nur rost- und gitterartige Abdeckung kann auf den Boden eines Raums verschüttetes Wasser oder auch jede sonstige Flüssigkeit in die Unterflurklimatisierungsvorrichtung gelangen. Das ist beispielsweise der Fall, wenn ein Wassereimer oder ein Blumenkübel umkippt und das Wasser oder eine sonstige Flüssigkeit in die Unterflurklimatisierungsvorrichtung läuft. Das Wasser oder eine sonstige Flüssigkeit können zu einem Kurzschluss in der Stromversorgung und im zum Antrieb eines Ventilators der Unterflurklimatisierungsvorrichtung dienenden Elektromotors führen. Auch Personen könnten theoretisch gefährdet werden, wenn Wasser oder eine andere Flüssigkeit in die Unterflurklimatisierungsvorrichtung gelangt. Übliche Sicherheitsvorkehrungen, wie Fehlerstromschutzschalter oder Sicherungen, können durch Flüssigkeiten hervorgerufene Schäden und Beeinträchtigungen am Produkt nicht vermeiden.

Es ist Aufgabe der Erfindung, eine Unterflurklimatisierungsvorrichtung zu schaffen, die Personen nicht gefährdet, insbesondere gegen Feuchtigkeit unempfindlich ist.

Eine Unterflurklimatisierungsvorrichtung zur Lösung dieser Aufgabe weist die Merkmale des Anspruchs 1 auf. Demnach ist der mindestens eine Elektromotor zum Antrieb eines Ventilators der Unterflurklimatisierungsvorrichtung als ein drehzahlregelbarer Niedervolt-Gleichstrommotor ausgebildet. Dieser erfüllt die gleichen Anforderungen, wie die bisher üblichen 230 V-Wechselstrommotoren. Weil ein Niedervolt-Gleichstrommotor mit einer Spannung wesentlich unter 230 V arbeitet, ist er für Personen ungefährlich, insbesondere auch in Verbindung mit Feuchtigkeit.

Als Niedervolt-Gleichstrommotor wird ein solcher Elektromotor verstanden, der mit einer Spannung von bis zu 50 V Gleichstrom betrieben wird.

Als Niedervolt-Gleichstrommotor wird bevorzugt ein elektronisch kommutierter Gleichstrommotor eingesetzt. Ein solcher Gleichstrommotor ist nicht nur unempfindlich gegen Feuchtigkeit, er lässt sich bei einem guten Wirkungsgrad stufenlos in der Drehzahl regeln. Ein solcher Elektromotor erfüllt alle Voraussetzungen, die an den Antrieb von Ventilatoren für Klimatisierungsgeräte gestellt werden und das mit einem Wirkungsgrad, der dem von bisher verwendeten 230 V-Gleichstrommotoren überlegen ist. Die Drehzahl des Niedervoltgleichstrommotors ist stufenlos veränderbar durch eine elektronische Steuerung der Kommutierung, nämlich Stromwendung, insbesondere eine stufenlose Veränderung der Frequenz der Kommutierung. Eine solche stufenlose Drehzahländerung ist bei elektronisch kommutierten Gleichstrommotoren besonders einfach, weil infolge der Kommutierung nur die Frequenz der Stromwendung mit der ohnehin erforderlichen elektronischen Schaltung zur Stromwendung verändert zu werden braucht. Diese Art der stufenlosen Drehzahländerung, insbesondere Drehzahlregelung, verfügt bei allen eingestellten Drehzahlen über einen etwa gleich guten Wirkungsgrad.

Gemäß einer weiteren Ausgestaltung der Erfindung ist vorgesehen, dass ein Transformator zur Änderung der 230 V-Wechselspannung in eine Niedervolt-Gleichspannung von bis zu 50 V verwendet wird. Vorzugsweise ist der Transformator gegen Feuchtigkeit geschützt, beispielsweise indem der Transformator mindestens gemäß der Schutzart IP 54 ausgebildet ist. Dadurch ist auch die Stromversorgung des Niedervolt-Gleichstrommotors gegen Feuchtigkeit, insbesondere Wasser oder sonstige Flüssigkeit, geschützt. Kurzschlüsse, die zur Gefährdung von Personen führen könnten, treten so auch in der Energieversorgung des Niedervolt-Gleichstrommotors nicht auf. Ebenso ist die Steuerung und/oder Regelung des Niedervolt-Gleichstrommotors, insbesondere zur elektronischen Kommutierung und Drehzahlveränderung des Niedervolt-Gleichstrommotors, gegen Feuchtigkeit geschützt.

Die Unterflurklimatisierungsvorrichtung kann erfindungsgemäß derart weitergebildet sein, dass sie eine Begrenzung der Minimaldrehzahl und/oder der Maximaldrehzahl aufweist. Sowohl die Minimaldrehzahl als auch die Maximaldrehzahl können einstellbar sein. Durch die Einstellung einer Minimaldrehzahl des Ventilatormotors wird sichergestellt, dass der Ventilator nach dem Stillstand problemlos mit der eingestellten Minimaldrehzahl anläuft, indem der Ventilator unter allen Bedingungen die eingestellte Minimaldrehzahl erreicht, diese also nicht unterschritten wird. Mit der einstellbaren Maximaldrehzahl, die von der Steuerung bzw. Regelung des Ventilators eingehalten wird, ist es möglich, die Geräusche des Ventilators zu begrenzen, indem dieser keine so hohen Drehzahlen erreicht, dass als unangenehm empfundene Geräusche vom Ventilator erzeugt werden. Vom Nutzer kann eine solche Unterflurklimatisierungsvorrichtung auch nicht so betrieben werden, dass der Ventilator eine Drehzahl erreicht, die die eingestellte Maximaldrehzahl überschreitet.

Es kann auch vorgesehen sein, die Steuerung bzw. Regelung des Ventilatormotors mit einer Anlaufstrom-Erhöhung zu versehen. Durch die Anlaufstrom-Erhöhung wird der Ventilator beim Einschalten kurzzeitig mit einer höheren Drehzahl betrieben, die gegebenenfalls auch die Maximaldrehzahl übersteigen kann.

Gemäß einer bevorzugten Weiterbildung bzw. alternativen Ausgestaltung der Unterflurklimatisierungsvorrichtung ist vorgesehen, die Drehzahl des Niedervoltgleichstrommotors lastunabhängig zu regeln. Die vorgegebene Drehzahl des Niedervolt-Gleichstrommotors wird so unter sämtlichen Betriebsbedingungen der Unterflurklimatisierungsvorrichtung konstant gehalten. So wird verhindert, dass bei erschwerten Betriebsbedingungen, beispielsweise einem verstopften Filter, der Niedervolt-Gleichstrommotor hochdreht auf eine höhere Drehzahl, was zu einem erhöhten Energieverbrauch und starken Laufgeräuschen führen würde.

Gemäß einer weiteren Ausgestaltung der Erfindung ist vorgesehen, den Niedervolt-Gleichstrommotor so zu steuern bzw. zu regeln, dass der mindestens eine Lüfter oder Ventilator der Unterflurklimatisierungsvorrichtung einen konstanten Luftvolumenstrom erzeugt. Der vom Ventilator erzeugte Luftvolumenstrom wird so an die gegebenen Bedingungen angepasst, indem er stets in etwa gleich bleibt. Durch die stufenlose Veränderbarkeit der Drehzahl des Niedervolt-Gleichstrommotors und den sich mit der Drehzahl kaum ändernden Wirkungsgrad desselben lässt sich die Konstanthaltung des Luftvolumenstroms des Ventilators der Unterflurklimatisierungsvorrichtung einfach herbeiführen. Die Folge ist eine wirtschaftliche Betriebsweise der erfindungsgemäßen Klimatisierungsvorrichtung.

Es ist des Weiteren vorgesehen, die Drehzahl des mindestens einen Lüfters oder Ventilators der Unterflurklimatisierungsvorrichtung zu überwachen. Diese Überwachung kann so erfolgen, dass bei Erreichen einer festgelegten Maximaldrehzahl, die durch verschmutzte Filter oder verschlossene Luftwege ausgelöst werden kann, eine Störmeldung erfolgt. Es wird so sichergestellt, dass der Lüfter bzw. Ventilator keine übermäßig hohe Drehzahl erreicht und aufgrund äußerer Einflüsse unnötig viel Energie verbraucht.

Gemäß einer bevorzugten Ausgestaltung der Erfindung ist vorgesehen, die Unterflurklimatisierungsvorrichtung raumtemperaturabhängig zu steuern, insbesondere die Drehzahl des mindestens einen Ventilators oder Lüfters. So wird beispielsweise im Kühlbetrieb bei ansteigender Raumtemperatur die Drehzahl des mindestens einen Ventilators oder Lüfters erhöht. Bei abfallender Raumtemperatur wird dementsprechend die Drehzahl des mindestens einen Ventilators oder Lüfters erniedrigt. Umgekehrt wird im Heizbetrieb die Drehzahl des mindestens einen Lüfters oder Ventilators gesteuert.

Die Unterflurklimatisierungsvorrichtung verfügt über eine Steuerung bzw. Regelung, die nicht nur den mindestens einen Ventilator ansteuert, sondern auch mindestens einen Ausgang, bevorzugt einem 0-10 V Ausgang, für die Verstellantriebe der Ventile des Wärmetauschers aufweist. Dadurch ist eine umfassende Anpassung der Unterflurklimatisierungsvorrichtung an die vorherrschenden Bedingungen und Vorgaben möglich.

Es ist denkbar, dem Niedervolt-Gleichstrommotor eine Zustandsüberwachungseinrichtung zuzuordnen. Diese Zustandsüberwachungseinrichtung kann dazu dienen, Motorbetriebsdaten vorzugsweise permanent anzuzeigen. Die Anzeige kann durch Übertragung der Motorbetriebsdaten an ein externes Kontrollsystem erfolgen. Durch die Ermittlung und Anzeige der Motorbetriebsdaten lässt sich ein permanenter energieeffizienter Betrieb der Unterflurklimatisierungseinrichtung sicherstellen. Denkbar ist es auch, die Zustandsüberwachungseinrichtung so auszubilden, dass sie die Isolierung des Niedervolt-Gleichstrommotors ständig überprüft. Wenn beispielsweise bei dieser Überwachung festgestellt wird, dass sich schlagartig der Isolationswiderstand ändert, deutet das auf einen Flüssigkeitseintritt hin. Dieser Fall kann zusammen mit anderen Motordaten auch von einem externen Kontrollsystem angezeigt werden. Wenn bei der Zustandsüberwachung des Niedervolt-Gleichstrommotors oder anderer Komponenten der Unterflurklimatisierungsvorrichtung eine Abweichung vom Sollwert festgestellt wird, beispielsweise sich der Isolationswiderstand abrupt ändert, kann eine automatische zentrale Abschaltung erfolgen. Gleiches kann beim Unterschreiten vorgegebener Sollwerte gelten, beispielsweise dann, wenn die Ventilatordrehzahl unter eine Minimaldrehzahl fällt.

Die Zustandsüberwachungseinrichtung ist bevorzugt in die Elektronik des Niedervolt-Gleichstrommotors integriert. Durch eine ebenfalls in die Motorelektronik integrierte Datenbusschnittstelle werden bevorzugt die ermittelten Motorbetriebsdaten an das externe Kontrollsystem oder andere Anzeigen übertragen.

Gemäß einer Weiterbildung der Steuerung oder Regelung ist vorgesehen, dass diese mindestens ein Störmeldesignal ausgeben kann. Die Steuerung oder Regelung kann beispielsweise mindestens ein Störmeldesignal erzeugen, wenn die Luftleistung des Ventilators zu gering ist, indem beispielsweise ein Filter verstopft ist, oder der Antrieb des mindestens einen Ventilators schadhaft bzw. blockiert ist. Vom Störmeldesignal kann eine Störmeldung optisch durch beispielsweise eine Leuchte, akustisch durch zum Beispiel eine Hupe oder einen potentialfreien Störmeldekontakt ausgegeben werden. Das die Störmeldung signalisierende Mittel, beispielsweise die Leuchte, kann im Gehäuse der Steuerung oder Regelung, aber auch an beliebigen anderen Stellen innerhalb oder außerhalb der Unterflurklimatisierungsvorrichtung, vorgesehen sein. Denkbar ist es auch, dass die Steuerung oder Regelung bei einer Störung den mindestens einen Ventilator automatisch abschaltet, insbesondere den Antrieb des Ventilators. Schließlich kann die Steuerung oder Regelung auch so ausgebildet sein, dass sie raumtemperaturabhängig die Drehzahl des Ventilators, insbesondere den Antrieb derselben, verändert.

Gemäß einer weiteren Ausgestaltungsmöglichkeit der Unterflurklimatisierungsvorrichtung ist eine Zustandsauswertung vorgesehen. Diese erfolgt vorzugsweise über einen internen Zustandsbeobachter mit einem Niederspannungsausgang. Die Ausgabe der Zustandsauswertung erfolgt über ein Signal, bei dem es sich um ein durch Pulsweitenmodulation erzeugtes Signal oder ein 0 bis 10 V Signal handelt.

Bevorzugte Ausführungsbeispiele der Erfindung werden nachfolgend anhand der Zeichnung näher erläutert. In dieser zeigen:
- Fig. 1: einen Querschnitt durch eine im Doppelboden eingebaute Unterflurklimatisierungsvorrichtung,
- Fig. 2: einen Querschnitt durch die im Estrich eingebaute Unterflurklimatisierungsvorrichtung, und

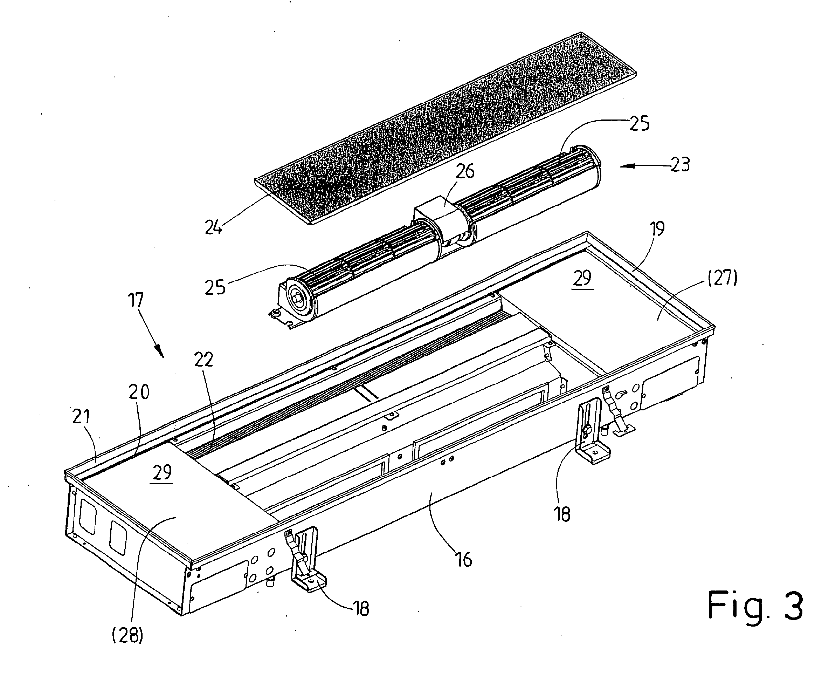

- Fig. 3: eine perspektivische Ansicht der Unterflurklimatisierungsvorrichtung mit herausgenommenem Querstromventilator und herausgenommenem Luftansaugfilter.

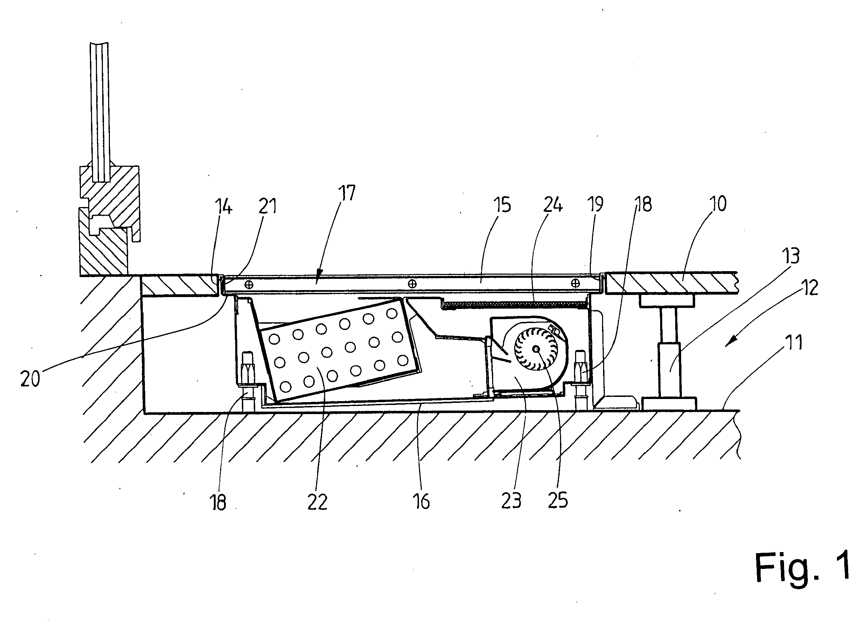

Die hier gezeigte Unterflurklimatisierungsvorrichtung kann zum Heizen und/oder zum Kühlen von Räumen dienen. Die Unterflurklimatisierungsvorrichtung der Fig. 1 ist angeordnet unter einem Doppelboden 10. Der Doppelboden 10 befindet sich mit etwas Abstand über einem Bäuwerksboden 11. Es entsteht so zwischen dem Bauwerksboden 11 und dem Doppelboden 10 ein Zwischenraum 12, der Platz zur Unterbringung der Unterflurklimatisierungsvorrichtung bietet. Der Doppelboden 10 ist über andeutungsweise in der Fig. 1 gezeigte Abstandshalter 13, die gleichzeitig den Doppelboden 10 tragen, auf den Bauwerksboden 11 abgestützt.

Im Doppelboden 10 befindet sich ein der Grundfläche der Unterflurklimatisierungsvorrichtung entsprechender Ausschnitt 14, und zwar insbesondere vor einem Fenster oder einer Fensterfront. Durch den Ausschnitt 14 im Doppelboden 10 ist die Unterflurklimatisierungsvorrichtung, insbesondere eine Wanne 16 derselben, von oben in den Zwischenraum 12 einsetzbar. Nach der Montage der Unterflurklimatisierungsvorrichtung wird der Ausschnitt 14 im Doppelboden 10 flächenbündig abgedeckt durch mindestens einen Rost 15, ein Gitter oder eine sonstige Abdeckung, die einen Luftdurchtritt nicht nennenswert beeinträchtigt.

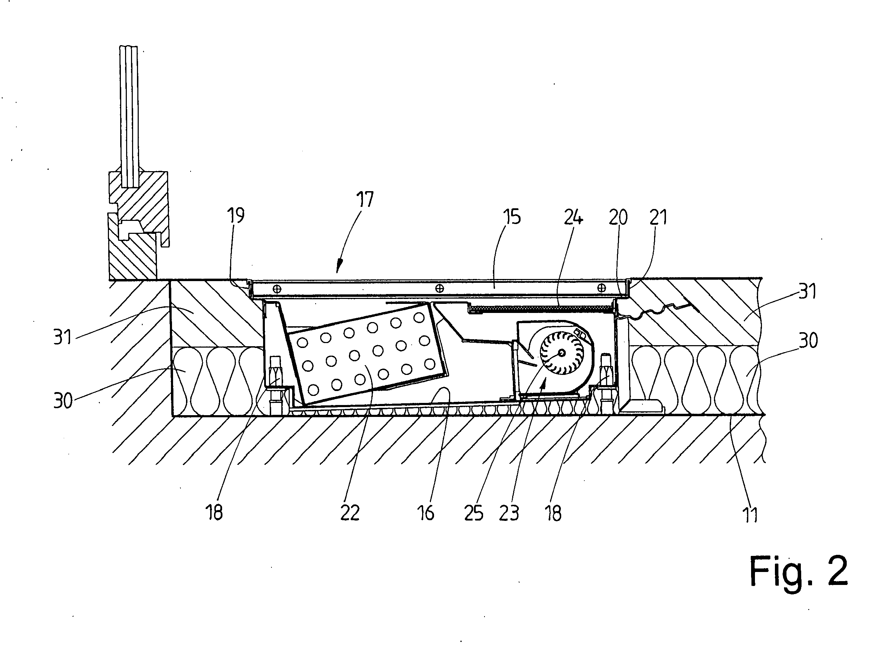

Die Unterflurklimatisierungsvorrichtung der Fig. 2 ist in einem Estrichbodenaufbau eingesetzt. Der Estrichbodenaufbau verfügt über eine untere Dämmschicht 30 und eine darüber angeordnete Estrichschicht 31. Der Estrichbodenaufbau weist im Bereich der Unterflurklimatisierungsvorrichtung eine Aussparung für eine Wanne 16 der Unterflurklimatisierungsvorrichtung auf. Die Unterflurklimatisierungsvorrichtung, insbesondere die Wanne 16 derselben, ist auf dem Bauwerksboden 11, worüber die Dämmschicht 30 und die Estrichschicht 31 angeordnet sind, abgestützt. Der für die Unterflurklimatisierungsvorrichtung ausgesparte Raum im Estrichbodenaufbau ist auch hier flächenbündig abgedeckt und mindestens einen Rost 15, ein Gitter oder eine sonstige Abdeckung.

Die im Doppelboden 10 gemäß der Fig. 1 und im Estrichbodenaufbau gemäß der Fig. 2 angeordneten Unterflurklimatisierungsvorrichtungen sind gleichermaßen ausgebildet. Die nachfolgende Beschreibung der Unterflurklimatisierungsvorrichtung gilt somit sowohl für das Ausführungsbeispiel der Fig. 1 als auch der Fig. 2.

Die rinnenartige, längliche Wanne 16 der Unterflurklimatisierungsvorrichtung ist an der Oberseite mit einer vollflächigen rechteckigen Öffnung 17 versehen. Die Seitenwandungen und die Bodenwandung der Wanne 16 sind vorzugsweise flüssigkeitsdicht ausgebildet; sie können auch teilweise offen sein. Die Wanne 16 ist mit höhenverstellbaren, fassadenseitigen Stellschrauben 18, Montagewinkeln oder dergleichen auf dem Bauwerksboden 11 aufgestellt. Vorzugsweise ist die Wanne 16 mit den Stellschrauben 18 lösbar auf dem Bauwerksboden 11 aufgestellt. Der die Öffnung 17 umgebende obere Rand der Wanne 16 ist mit einem umlaufenden Winkelprofil 19 versehen. Das Winkelprofil 19 ist im Querschnitt rechtwinklig ausgebildet, verfügt nämlich über einen horizontalen Schenkel 20 und einen daran anschließenden, außenliegenden vertikalen Schenkel 21. Der horizontale Schenkel 20 bildet eine in einer horizontalen Ebene umlaufende Auflage für den Rand des Rosts 15. Der vertikale Schenkel 21 umgibt den horizontalen Schenkel 20 zur Bildung eines umlaufenden Kragens, der korrespondierend zum Ausschnitt 14 im Doppelboden 10 ausgebildet ist, indem er an den Kanten des Ausschnitts 14 entlang läuft und dadurch die Wanne 16 im Ausschnitt 14 zentriert und führt.

Die Unterflurklimatisierungsvorrichtung weist in der Wanne 16 einen Konvektor 22 bzw. einen Wärmetauscher und einen Querstromventilator 23 auf. Über der Ansaugseite des Querstromventilators 23 ist ein Luftansaugfilter 24 vorgesehen. Hierbei kann es sich um ein feinmaschiges Netz oder ein Filtervlies handeln. Der Luftansaugfilter 24 befindet sich zwischen dem Rost 15 und dem Querstromventilator 23. Vom Querstromventilator 23 wird Raumluft durch den Rost 15 und den Luftansaugfilter 24 angesaugt. Auf der seitlichen Druckseite des Querstromventilators 23 wird die Luft vom Querstromventilator 23 zum daneben angeordneten Konvektor 22 oder Wärmetauscher geleitet. Die Luft strömt am Konvektor 22 oder Wärmetauscher entlang, wobei sie je nach Betriebsweise der Unterflurklimatisierungsvorrichtung gekühlt oder erwärmt wird. Die vom Konvektor 22 oder Wärmetauscher abgekühlte oder erwärmte Luft wird von der Unterflurklimatisierungsvorrichtung durch den Rost 15 mit einer aufrechten Strömung in den Raum abgegeben.

Der Querstromventilator 23 weist im gezeigten Ausführungsbeispiel zwei zylindrische Lüfterräder 25 auf, die gemeinsam von einem zwischen den Lüfterrädern 25 angeordneten Elektromotor angetrieben werden. Alternativ kann der Querstromventilator 23 auch nur ein einziges, vorzugsweise auch zylindrisches Lüfterrad aufweisen, das vom Elektromotor angetrieben ist, der dann einer Stirnseite des einzigen Lüfterrads zugeordnet ist. Der Elektromotor ist erfindungsgemäß als ein Niedervolt-Gleichstrommotor 26 ausgebildet. Die Betriebsspannung des Niedervolt-Gleichstrommotors 26 beträgt bis zu 50 V Gleichstrom, beträgt vorzugsweise etwa 12 V oder 24 V. Der Niedervolt-Gleichstrommotor 26 ist in besonderer Weise als ein elektronisch kommutierter Gleichstrommotor ausgebildet. Bei einem solchen Niedervolt-Gleichstrommotor 26 erfolgt die Stromwendung durch eine elektronische Steuerung, die quasi nach dem Prinzip eines elektronischen Schalters arbeitet. Die Drehzahl des elektronisch kommutierten Niedervolt-Gleichstrommotors 26 ist stufenlos änderbar durch ebenfalls eine elektronische Schaltung, die vorzugsweise als eine elektronische Regelung ausgebildet ist bzw. eine elektronische Regelung aufweist. Bei dieser elektronischen Schaltung bzw. Regelung handelt es sich bevorzugt um die gleiche, die die elektronische Kommutierung vornimmt. Es wird dann zur stufenlosen Drehzahländerung des Niedervolt-Gleichstrommotors 26 die Frequenz der Kommutierung, also der zeitliche Abstand zwischen jeweils zwei der Stromwendungen, verändert. Proportional zur Veränderung der Frequenz verändert sich die Drehzahl des Niedervolt-Gleichstrommotors 26, indem bei höherer Frequenz die Drehzahl zunimmt und bei niedriger Frequenz sich eine geringere Drehzahl des Niedervolt-Gleichstrommotors 26 einstellt.

Gegenüberliegende Endbereiche an Schmalseiten der Wanne 16 weisen Aufnahmeräume auf, und zwar einen Aufnahmeraum 27 für die Anschlüsse des Konvektors 22 an einem Ende und einen am gegenüberliegenden Ende der Wanne 16 angeordneten Aufnahmeraum 28 für die Elektroversorgung und Steuerung des Niedervolt-Gleichstrommotors 26. Beide Aufnahmeräume 27 und 28 sind an der Oberseite mit einer Abdeckung 29 versehen, die entweder lose aufgelegt oder lösbar mit zum Beispiel der Wanne 16 verbunden sind. Im Aufnahmeraum 28 sind eine nicht gezeigte Steuerung bzw. Regelung und ein Transformator für den Niedervolt-Gleichstrommotor 26 angeordnet. Der Transformator dient dazu, die 230 Volt Wechselspannung eines üblichen Stromversorgungsnetzes umzuwandeln in einen Niedervoltgleichstrom, insbesondere einen Gleichstrom mit einer Spannung von bis zu 50 V, beispielsweise 12 V oder 24 V. Die Abdeckung 29 mindestens des Aufnahmeraums 28 ist flüssigkeitsdicht ausgebildet, so dass die empfindliche Steuerung bzw. Regelung und der Transformator flüssigkeitsdicht im Aufnahmeraum 28 angeordnet sind. Dementsprechend ist die Wanne 16 zumindest im Bereich des Aufnahmeraums 28 mit flüssigkeitsdichten Wandungen oder Wandabschnitten versehen.

Durch die Unterbringung der Steuerung bzw. Regelung, insbesondere die Elektronik, zur Kommutierung des Niedervolt-Gleichstrommotors 26 und alternativ oder auch zusätzlich des Transformators im wasserdichten Aufnahmeraum 28 oder einem sonstigen flüssigkeitsdichten Gehäuse sind die elektrischen bzw. elektronischen Komponenten zum Betrieb des Niedervolt-Gleichstrommotors 26 gegen Feuchtigkeit geschützt. Die Schaltung und der Transformator selbst brauchen keine besonderen Schutzmaßnahmen aufzuweisen oder bestimmte Schutzart-Anforderungen erfüllen. Es ist aber denkbar, einen feuchtigkeitsgeschützten Transformator und/oder eine feuchtigkeitsgeschützte Steuerung bzw. Regelung, beispielsweise mindestens der Schutzart IP 54, zu verwenden. Dann braucht der Transformator nicht im Aufnahmeraum 28 angeordnet zu sein oder der Aufnahmeraum 28 braucht dann nicht flüssigkeitsdicht zu sein.

Weil sich der Niedervolt-Gleichstrommotor 26 zwischen den Lüfterrädern 25 des Querstromventilators 23 in der nur vom Rost 15 abgedeckten Wanne 16 befindet, ist der Niedervolt-Gleichstrommotor 26 Feuchtigkeiten oder Flüssigkeiten, die in die Wanne gelangen, ausgesetzt. Weil es sich aber um einen Niedervolt-Gleichstrommotor 26 handelt, der vorzugsweise mit 12 V oder 24 V Gleichspannung betrieben wird, führen in die Wanne 16 gelangende Flüssigkeiten oder Feuchtigkeit zu keinem Kurzschluss auf der 230 V Seite und es können Personen durch die Niedervolt-Gleichspannung nicht zu Schaden kommen, wenn die Zuleitungen und insbesondere der Niedervolt-Gleichstrommotor 26 feucht oder nass werden. Gleiches gilt, wenn Feuchtigkeit oder Nässe auf den außerhalb des wasserdichten Aufnahmeraums 28 angeordneten Transformator mindestens der Schutzart IP 54 gelangen.

Es ist denkbar, dass die Unterflurklimatisierungsvorrichtung eine Regelung aufweist, die den vom Querluftventilator 23 erzeugten Luftvolumenstrom konstant hält, und zwar auch dann, wenn irgendwelche Störgrößen auftreten, beispielsweise der Luftansaugfilter 24 oder ein sonstiger Filter verschmutzt bzw. verstopft ist. Selbst unter solchen ungünstigen Bedingungen wird die Drehzahl des stufenlos regelbaren Niedervolt-Gleichstromventilators 26 so verändert, dass gleichwohl der vom Querstromventilator 23 erzeugte Luftvolumenstrom konstant bleibt.

Alternativ oder zusätzlich kann die Unterflurklimatisierungsvorrichtung eine Drehzahl-Konstanthaltung aufweisen. Diese sorgt dafür, dass die Drehzahl des Querstromventilators 23 nicht übermäßig erhöht wird, wenn beispielsweise der Luftansaugfilter 24 verstopft ist. Wenn zum Beispiel die Konstanthaltung des vom Querstromventilator 23 erzeugten Luftstroms nur mit einer recht hohen Drehzahl des Querstromventilators 23 erreicht werden könnte, sorgt die Drehzahl-Konstanthaltung dafür, dass der Querstromventilator 23 nicht mit einer so hohen Drehzahl betrieben wird, nämlich nicht hochdreht, was zu Geräuschen führen könnte.

Die Steuerung bzw. Regelung für die Drehzahl-Konstanthaltung und die Konstanthaltung des vom Querstromventilators 23 erzeugten Luftstroms können in die elektronische Kommutierung des Niedervolt-Gleichstrommotors 26 integriert sein. Die Steuerung bzw. Regelung zur Drehzahl-Konstanthaltung bzw. Konstanthaltung des vom Querstromventilators 23 erzeugten Luftvolumenstroms ist bevorzugt auch im flüssigkeitsdicht ausgebildeten Aufnahmeraum 28 oder in einem flüssigkeitsdichten, separaten Gehäuse angeordnet.

### Bezugszeichenliste:

- 10: Doppelboden
- 11: Bauwerksboden
- 12: Zwischenraum
- 13: Abstandshalter
- 14: Ausschnitt
- 15: Rost
- 16: Wanne
- 17: Öffnung
- 18: Stellschraube
- 19: Winkelprofil
- 20: horizontaler Schenkel
- 21: vertikaler Schenkel
- 22: Konvektor
- 23: Querstromventilator
- 24: Luftansaugfilter
- 25: Lüfterrad
- 26: Niedervolt-Gleichstrommotor
- 27: Aufnahmeraum
- 28: Aufnahmeraum
- 29: Abdeckung
- 30: Dämmschicht
- 31: Estrichschicht

## Patentansprüche

1. Unterflurklimatisierungsvorrichtung mit einer Heiz- oder einer Kühleinrichtung und einem von einem Elektromotor angetriebenen Ventilator, **dadurch gekennzeichnet, dass** der Elektromotor als ein drehzahlgeregelter Niedervolt-Gleichstrommotor (26) ausgebildet ist.

2. Unterflurklimatisierungsvorrichtung nach Anspruch 1, **dadurch gekennzeichnet, dass** der Niedervolt-Gleichstrommotor (26) mit einer maximalen Betriebsspannung von 12 V bis 50 V Gleichstrom arbeitet.

3. Unterflurklimatisierungsvorrichtung nach Anspruch 1 oder 2, **dadurch gekennzeichnet, dass** der Niedervolt-Gleichstrommotor (26) ein elektronisch kommutierter Gleichstrommotor ist.

4. Unterflurklimatisierungsvorrichtung nach einem der vorhergehenden Ansprüche, **dadurch gekennzeichnet, dass** die Drehzahl des Niedervolt-Gleichstrommotors (26) stufenlos durch eine elektronische Steuerung der Kommutierung veränderbar ist, insbesondere durch eine Veränderung der Frequenz der Kommutierung.

5. Unterflurklimatisierungsvorrichtung nach einem der vorhergehenden Ansprüche, **gekennzeichnet durch** einen Transformator zur Erzeugung einer Niedervolt-Gleichspannung im Bereich von bis zu 50 V, vorzugsweise 12 V bis 50 V, für den Niedervolt-Gleichstrommotor (26).

6. Unterflurklimatisierungsvorrichtung nach einem der vorhergehenden Ansprüche, **dadurch gekennzeichnet, dass** der Transformator und/oder eine Elektronik zur Kommutierung des Niedervolt-Gleichstrommotors (26) gegen Feuchtigkeit geschützt sind, insbesondere mindestens der Schutzart IP 54.

7. Unterflurklimatisierungsvorrichtung nach einem der vorhergehenden Ansprüche, **dadurch gekennzeichnet, dass** der Transformator und/oder eine Elektronik zur Kommutierung des Niedervolt-Gleichstrommotors (26) in einem flüssigkeitsdichten Aufnahmeraum (28) und/oder in einem separaten, flüssigkeitsdichten Gehäuse angeordnet sind.

8. Unterflurklimatisierungsvorrichtung nach einem der vorhergehenden Ansprüche, **dadurch gekennzeichnet, dass** eine elektrische Ansteuerung für den Ventilator und/oder mindestens wasserseitige Ansteuerungsventile in wenigstens einem separaten Gehäuse angeordnet sind.

9. Unterflurklimatisierungsvorrichtung nach einem der vorhergehenden Ansprüche, **gekennzeichnet durch** eine Steuerung bzw. Regelung, die vorzugsweise zur Konstanthaltung des Luftvolumenstroms des Ventilators ausgebildet ist.

10. Unterflurklimatisierungsvorrichtung nach Anspruch 9, **dadurch gekennzeichnet, dass** der Steuerung bzw. Regelung eine Anlaufstrom-Erhöhung zugeordnet ist bzw. eine solche aufweist.

11. Unterflurklimatisierungsvorrichtung nach Anspruch 9 oder 10, **dadurch gekennzeichnet, dass** die Steuerung bzw. Regelung einen Störungsmeldeausgang aufweist, wobei vorzugsweise der Störungsmeldeausgang zu einer Signalleuchte, einem akustischen Signalgeber und/oder einem potentialfreien Störmeldekontakt führt.

12. Unterflurklimatisierungsvorrichtung nach einem der Ansprüche 9 bis 11, **dadurch gekennzeichnet, dass** die Steuerung bzw. Regelung eine Drehzahlbegrenzung, insbesondere eine Begrenzung der Minimaldrehzahl und/oder der Maximaldrehzahl, aufweist.

13. Unterflurklimatisierungsvorrichtung nach einem der vorhergehenden Ansprüche, **gekennzeichnet durch** eine Einrichtung zur lastunabhängigen Regelung der Drehzahl des Niedervolt-Gleichstrommotors (26), insbesondere zur lastunabhängigen Konstanthaltung der Drehzahl des Niedervolt-Gleichstrommotors (26).

14. Unterflurklimatisierungsvorrichtung nach einem der vorhergehenden Ansprüche, **dadurch gekennzeichnet, dass** dem Niedervolt-Gleichstrommotor eine Zustandsüberwachungseinrichtung zugeordnet ist, insbesondere in die Elektronik des Niedervolt-Gleichstrommotors (26) eine Zustandsüberwachung integriert ist.
